# EUROPÄISCHE PATENTANMELDUNG

(11) **EP 4 270 174 A1**
(43) Veröffentlichungstag der Anmeldung: **01.11.2023**
(21) Anmeldenummer: 22169949.9
(22) Anmeldetag: 26.04.2022
(51) Int. Cl.: G06F 7/72

(54) **LAUFZEITUNABHÄNGIGE MODULOREDUKTION UND/ODER DIVISION**

(71) Anmelder: Siemens Aktiengesellschaft, 80333 München (DE)
(72) Erfinder: Zwanzger, Johannes, 85579 Neubiberg (DE)
(74) Vertreter: Siemens Patent Attorneys

(57) **Zusammenfassung**

Die Erfindung betrifft ein computerimplementiertes Verfahren zur Moduloreduktion und/oder zur Division,
mit den Schritten:
- Ein Abrufen einer Integer-Langzahl (R),
- Eine Moduloreduktion und/oder eine Division der Integer-Langzahl durch Bilden eines Modulos (R2) und/oder eines Divisionsergebnisses (R3) der Integer-Langzahl durch einen Algorithmus,
wobei der Algorithmus zur Bestimmung des Modulos (R2) und/oder des Divisionsergebnisses (R3) eine Folge von Rechenschritten ausführt deren Ausführungszeit und Art unabhängig von der Integer-Langzahl (R) ist
und
- Ein Ausgeben des Modulos (R2) und/oder des Divisionsergebnisses (R3).

Außerdem betrifft die Erfindung ein zugehöriges programmierbares Hardwareelement, ein Computerprogrammprodukt und ein computerlesbares Medium.

## Beschreibung

### HINTERGRUND DER ERFINDUNG

### Gebiet der Erfindung

Die vorliegende Erfindung betrifft ein Verfahren zur Moduloreduktion und/oder zur Division. Die Erfindung betrifft außerdem ein zugehöriges programmierbares Hardwareelement, ein Computerprogrammprodukt und ein computerlesbares Medium.

### Beschreibung des Stands der Technik

Für bestimmte Anwendungen ist es notwendig, das Ergebnis der Division oder den unteilbaren Rest ("Modulo-Operation") bei der Division sehr großer ganzer Zahlen ("Integer-Langzahlen") zu ermitteln. Bei Anwendungen in der Kryptographie kommt unter Umständen die Randbedingung hinzu, dass die Laufzeit der gesamten Division und/oder Moduloperation sowie die dabei verwendete Folge an Rechenoperationen, sowohl hinsichtlich der Art der Operationen als auch hinsichtlich der Speicheradressen der beteiligten Operanden bei vorab festgelegten Datengrößen nicht von der Ausprägung der Daten abhängen sollte. Dies wird im Folgenden als "datenunabhängige Laufzeit und Operationsfolge" bezeichnet. Eine datenunabhängige Laufzeit ist erforderlich, um keine Rückschlüsse auf die Daten durch sogenannte Seitenkanalangriffe zu erlauben.

Es sei an dieser Stelle angemerkt, dass "datenunabhängige Laufzeit" nicht gleichbedeutend mit "konstanter Laufzeit" ist. Schwankungen in der Laufzeit der Zufallszahlengenerierung sind akzeptabel, wenn sie nur durch von der Ausprägung der Daten (hier der Zufallszahl) unabhängige Effekte verursacht werden, wie z.B. eine höhere Ressourcenauslastung durch parallellaufende andere Anwendungen.

Eines von mehreren Beispielen ist die Generierung von Schlüsseln oder Nonces für bestimmte Algorithmen, wie den Elliptic Curve Digital Signature Algorithm (ECDSA), bei denen ganzzahlige Zufallszahlen gleichverteilt in einem bestimmten Wertebereich [0; b) erzeugt werden müssen, wobei b eine von einer Zweierpotenz verschiedene ganze Zahl ist, durch welche eine Integer-Langzahl R geteilt wird.

Sowohl Pseudo Random Number Generators (PRNG) als auch True Random Number Generators (TRNG) generieren meist aber einfach eine Folge an Zufallsbits, die sich direkt nur als Zufallszahl modulo einer Zweierpotenz a interpretieren lassen. Eine sinnvolle Transformation in eine Zufallszahl aus dem Intervall [0; b) ist überraschend schwierig, wenn die resultierende Zufallszahl möglichst Bias-frei über das Intervall verteilt sein sollen, d.h. bei wiederholter Anwendung für verschiedene zu transformierende Zufallszahlen R gleichwahrscheinlich über das Intervall verteilt sein sollen und ihre Generierung zum Schutz vor Seitenkanalangriffen mit einer datenunabhängigen Laufzeit und Operationsfolge erfolgen soll. Gleichwahrscheinlich ist hierbei gleichbedeutend zu gleichverteilt.

In "Schaltungen der Datenverarbeitung" von Klaus Kran, Springer-Verlag, 08.03.2013, Seiten 83-84, werden insgesamt drei Varianten eines Dividierers beschrieben. Die erste Variante (serieller Dividierer "mit Rückstellen des Restes") besitzt aufgrund der nur bei negativem Rest erfolgenden Rückstellungsschritte von vornherein keine datenunabhängige Laufzeit. Eine solche erscheint bei der zweiten Variante (serieller Dividierer "ohne Rückstellen des Restes") prinzipiell möglich, trotzdem ergibt sich eine datenabhängige Operationsfolge (da eine Subtraktion bei einem positiven Rest vorgenommen wird und eine Addition bei einem negativen Rest erfolgt). Die dritte Variante (paralleler Dividierer) scheidet schon aufgrund der Rechenungenauigkeiten bei der tabellarischen Darstellung eines Kehrwertes als Gleitkommazahl aus.

Zur Generierung von Zufallszahlen in einem Intervall [0,b) (wobei b eine von einer Zweierpotenz verschiedene ganze Zahl ist, durch welche eine Integer-Langzahl R geteilt wird), werden im Folgenden drei weitere bekannte Ansätze vorgestellt.

Als Vorabbemerkung sei angemerkt, dass in den folgenden Ausführungen unter einem Repräsentanten einer ganzen Zahl x modulo y jede Zahl z mit der Eigenschaft verstanden wird, dass x-z ein Vielfaches von y ist. Als kanonischer Repräsentant von x modulo y wird der eindeutig bestimmte Repräsentant aus dem Intervall [0; y) bezeichnet. a und b tragen die Bedeutung wie zuvor eingeführt: a ist eine Zweierpotenz, b ist eine von einer Zweierpotenz verschiedene ganze Zahl.
1) Der einfachste Ansatz, a als die kleinste Zweierpotenz 2^{k+1} größer als b zu wählen (2^{k} entspricht dabei dem führenden Bit in der Binärdarstellung von b) und eine Zufallszahl aus [0; a) durch Reduktion modulo b ins Intervall [0; b) zu überführen (dies erfordert höchstens eine einmalige Subtraktion von b), führt zu einer schiefen Verteilung: Die kanonischen Repräsentanten modulo b zu Zahlen aus dem Intervall [b; a) sind überrepräsentiert.
2) Ändert man den vorangehend beschriebenen Ansatz 1) dahingehend, dass Ergebnisse aus dem Intervall [b; a) ignoriert und die Zufallszahlenerzeugung so lange wiederholt wird, bis ein Ergebnis aus [0; b) herauskommt, muss im Worstcase (b = Zweierpotenz+1, denn dann ist Größenunterschied zwischen b und a am größten) durchschnittlich fast die Hälfte der erzeugten Zufallsbits verworfen werden, siehe Patentanmeldung US20020090085A1, BlackBerry Ltd.
3) Eine Art Kompromiss stellt der Ansatz dar, für a größere Zweierpotenzen als 2^{k+1} zu wählen (etwa 2^{k+n+1}) und dann eine Zufallszahl aus [0; a) modulo b zu reduzieren. Dies ergibt nach wie vor eine ungleiche Verteilung auf [0; b), aber die Verzerrung wird mit höheren Werten von n immer kleiner. Umgekehrt werden für die Erzeugung einer Zufallszahl aus [0; b) dann aber auch zunehmend mehr Zufallsbits benötigt, d.h. es entsteht mehr "Verschnitt". Dieser Ansatz wird mit n=64 vom deutschen Bundesamt für Sicherheit in der Informationstechnik als Alternative zu Ansatz 2) empfohlen.

Ansatz 3) ist prinzipiell attraktiv, allerdings ist es gerade im Bereich von kryptographisch genutzten Zufallszahlen (z.B. zur Generierung von Schlüsseln) oft wichtig, ihre Erzeugung so zu implementieren, dass die Laufzeit und/oder die Folge der Operationen nicht von der Ausprägung der generierten Zufallszahl abhängen. Andernfalls könnte ein Angreifer durch Messen und Analysieren der Laufzeiten bzw. der verwendeten Operationen bzw. Operandenadressen und ihrer direkten wie indirekten Auswirkungen unter Umständen Rückschlüsse auf die generierte Zufallszahl ziehen, dies ist als ein Seitenkanalangriff bekannt. Die in handelsüblichen Bibliotheken für Langzahlarithmetik verwendeten Implementierungen zur Reduktion einer Zahl aus [0; a) modulo b dürften in der Regel aber keine solche Datenunabhängigkeit aufweisen. Divisionen auf Registerbreite eines Prozessors können (z.B. aufgrund von Optimierungen) eine Payload-abhängige Laufzeit aufweisen, aber auch datenabhängige Caching-Effekte (z.B. bei Tabellenzugriffen) und bedingte Sprünge können zu einer Datenabhängigkeit der Laufzeit führen.

Die Aufgabe der Erfindung besteht darin, eine Lösung für eine vor Seitenkanalangriffen kryptographisch sicherere Möglichkeit bereitzustellen, Zahlen zu kleineren Zahlen zu reduzieren.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft ein computerimplementiertes Verfahren zur Moduloreduktion und/oder zur Division, mit den Schritten:
- Ein Abrufen einer Integer-Langzahl,
- Eine Moduloreduktion und/oder eine Division der Integer-Langzahl durch Bilden eines Modulos und/oder eines Divisionsergebnisses der Integer-Langzahl durch einen Algorithmus,
   wobei der Algorithmus zur Bestimmung des Modulos und/oder des Divisionsergebnisses eine Folge von Rechenschritten ausführt deren Ausführungszeit und Art unabhängig von der Integer-Langzahl ist
   und
- Ein Ausgeben des Modulos und/oder des Divisionsergebnisses.

Das Modulo ist der unteilbare Rest der Integer-Langzahl.

Eine Integer-Langzahl bezeichnet in der Langzahlarithmetik üblicherweise eine Zahl mit einem Betrag größer 2 Milliarden bei 32-Bit-Computern oder 9 Trillionen bei 64-Bit-Computern.

Eine datenunabhängige Laufzeit gewährleistet, keine Rückschlüsse auf die Integer-Langzahl durch sogenannte Seitenkanalangriffe zu erlauben. "Datenunabhängige Laufzeit" ist hierbei nicht gleichbedeutend mit "konstanter Laufzeit". Schwankungen in der Laufzeit der Zufallszahlengenerierung sind akzeptabel, wenn sie nur durch von der Ausprägung der Daten (hier der Zufallszahl) unabhängige Effekte verursacht werden, wie z.B. eine höhere Ressourcenauslastung durch parallellaufende andere Anwendungen.

Generell sei zu der Folge von Rechenschritten, deren Ausführungszeit unabhängig von der Integer-Langzahl ist, noch angemerkt, dass eine Unabhängigkeit auch dann vorliegt, wenn die vermeintlichen Abhängigkeiten nur scheinbarer Natur sind. Als Beispiel definiert eine Bedingung "Integer-Langzahl+1 > Integer-Langzahl" keine echte Abhängigkeit, da sie "1>0" oder "true" entspricht und somit keine Bedingung besteht. Unabhängig bedeutet außerdem, dass für eine unterschiedliche Ausprägung der Integer-Langzahl die Laufzeit immer identisch ist.

Außerdem sei angemerkt, dass sich die Unabhängigkeit der Rechenschritte auf Rechenschritte "zur Bestimmung des Modulos und/oder des Divisionsergebnisses" bezieht, hierunter fallen keine Scheinschritte, welche keinen zwingenden oder zielführenden Beitrag für die verwendete Berechnung leisten.

Ein Aspekt der Erfindung besteht darin, eine effiziente Implementierung von dem oben beschriebenen Ansatz 3), welcher für a größere Zweierpotenzen als 2^{k+1} wählt (etwa 2^{k+n+1}) und dann eine Zufallszahl aus [0; a) modulo b reduziert, zusätzlich mit Vorteil einer datenunabhängigen Laufzeit anzugeben.

In einer Weiterbildung der Erfindung weist das Verfahren den weiteren Schritt auf:
- Generieren eines kryptographischen Schutzes unter Verwendung des Modulos und/oder des Divisionsergebnisses.

Der auf diese Weise generierte kryptographische Schutz hat den Vorteil, zusätzlich Schutz vor Seitenkanalangriffen zu bieten.

In einer weiteren Weiterbildung der Erfindung wird der weitere Schritt durch:
- einen Elliptic Curve Digital Signature Algorithm (ECDSA) und/oder
- einen Algorithmus zur Zufallszahlenerzeugung und/oder
- Rivest-Shamir-Adlema (RSA) Verfahren
durchgeführt.

Der durch die genannten Algorithmen generierte kryptographische Schutz hat den Vorteil, zusätzlich Schutz vor Seitenkanalangriffen zu bieten.

In einer weiteren Weiterbildung der Erfindung ist der kryptographische Schutz als:
- ein kryptographischer Schlüssel oder
- ein kryptographisches Schlüsselpaar oder
- eine Nonce
ausgebildet.

Der auf diese Weise generierte kryptographische Schutz hat den Vorteil, zusätzlich Schutz vor Seitenkanalangriffen zu bieten.

In einer weiteren Weiterbildung der Erfindung liegt das Modulo innerhalb eines vorgegebenen Intervalls, ist das Intervall von einer unteren Grenze bis zu einer oberen Grenze definiert und wird das Modulo insbesondere mit der Integer-Langzahl als Dividend und der oberen Grenze als Divisor gebildet. Dies hat den Vorteil, dass das resultierende Modulo immer kleiner der oberen Grenze ist und so eine Integer-Zahl kleiner einer oberen Grenze definiert. Dies bietet außerdem den weiteren Vorteil, Zufallszahlen annähernd gleichverteilt auf den Wertebereich [0; b) zu reduzieren, falls null als untere Grenze definiert ist.

In einer weiteren Weiterbildung der Erfindung ist die untere Grenze durch die Zahl null definiert. Dies bietet den zuvor genannten Vorteil und ist für verschiedene kryptographische Anwendungen Voraussetzung, darunter der Elliptic Curve Digital Signature Algorithm (ECDSA) und das Rivest-Shamir-Adlema (RSA) Verfahren.

In einer weiteren Weiterbildung der Erfindung ist der Algorithmus zur Bestimmung des Modulos und/oder des Divisionsergebnisses als eine Folge von Rechenschritten ausführt deren:
- Anzahl und/oder
- Speicheradresse
außerdem unabhängig von der Integer-Langzahl sind.

Diese Weiterbildungen haben den Vorteil, zusätzlichen Schutz vor Seitenkanalangriffen zu bieten.

Bezüglich der Auslegung des Begriffs "unabhängig" sei auf oben Genanntes verwiesen. Anders ausgedrückt wird hier noch hinzugefügt, dass die Folge der Rechenschritte somit immer dieselbe ist und unabhängig von einer Ausprägung der Langzahl immer dieselben Schritte ausgeführt werden. Dies ist so zu verstehen, dass selbstverständlich nicht die Rechenergebnisse der Schritte unabhängig von der Langzahl sind, aber die Ausführung der Rechenschritte, welche immer vollständig und im selben Umfang (Anzahl) vorgenommen wird, ist es.

In einer weiteren Weiterbildung der Erfindung verwendet der Algorithmus zur Bestimmung des Modulos und/oder des Divisionsergebnisses ausschließlich:
- bitweise logische Operationen und
- eine Addition unter Berücksichtigung von Übertragsbits.

Dies hat den Vorteil, dass die Schritte zur Berechnung auf üblichen General-Purpose-Prozessoren immer dieselbe Laufzeit haben, da beispielsweise keine Multiplikation verwendet wird. Außerdem lassen sich die Rechenschritte auf diese Weise mit geringem Ressourcenbedarf auf integrierten Schaltkreisen wie einem FPGA (Field Programmable Gate Array) oder einem ASIC (application-specific integrated circuit) implementieren.

In einer weiteren Weiterbildung der Erfindung umfassen die bitweisen logischen Operationen:
- einen Ladebefehl einer Binärzahl und/oder
- einen Speicherbefehl einer Binärzahl und/oder
- ein Setzen eines Binärzeichens an eine einzelne Bitposition und/oder
- eine Expansion eines Binärzeichens auf mehrere Bitpositionen und/oder
- eine logische XOR-Operation und/oder
- eine logische AND-Operation und/oder
- eine logische Einerkomplementoperation und/oder
- eine Shiftoperation, welche ausgebildet ist, Binärzeichen um eine definierte Anzahl an Bitpositionen zu verschieben.

Dies hat ebenfalls den Vorteil, dass die Schritte zur Berechnung auf üblichen General-Purpose-Prozessoren immer dieselbe Laufzeit haben, da die einzelnen Operationen immer dieselbe Laufzeit haben und somit die Summe der Operationen eine konstante Gesamtlaufzeit hat. Außerdem lassen sich die Rechenschritte auf diese Weise mit geringem Ressourcenbedarf auf integrierten Schaltkreisen wie einem FPGA (Field Programmable Gate Array) oder einem ASIC (application-specific integrated circuit) implementieren.

In einer weiteren Weiterbildung der Erfindung weist der Algorithmus keinen Schritt auf, dessen Ausführung an eine Bedingung geknüpft ist, welche von der Integer-Langzahl abhängig ist. Bedingungen wären insbesondere if-Zweige, welche abhängig von der Größe/Wert der Integer-Langzahl ausgeführt werden.

Dies hat den Vorteil, dass Algorithmus immer dieselbe Laufzeit hat, da immer und unabhängig von Bedingungen alle Schritte ausgeführt werden.

In einer weiteren Weiterbildung der Erfindung wurde die Integer-Langzahl von:
- einem Pseudo Random Number Generator (PRNG) oder
- einem True Random Number Generator (TRNG)
erzeugt.

Dies hat den Vorteil, dass die reduzierte Zahl und damit das Modulo und/oder Divisionsergebnis ebenfalls eine Zufallszahl ist, welche aufgrund der Laufzeitunabhängigkeit des Algorithmus außerdem sicher vor Seitenkanalangriffen ist.

Die Erfindung umfasst außerdem ein programmierbares Hardwareelement, insbesondere ausgebildet als ein integrierter Schaltkreis wie ein FPGA (Field Programmable Gate Array) oder ein ASIC (application-specific integrated circuit), ausgebildet ein erfindungsgemäßes Verfahren auszuführen.

Dies hat den Vorteil, dass ein programmierbares Hardwareelement die Rechenvorrausetzungen und -kapazitäten erfüllt, welche das erfindungsgemäße Verfahren benötigt.

In einer weiteren Weiterbildung der Erfindung weist das programmierbare Hardwareelement auf:
- eine Abrufeinheit, ausgebildet eine Integer-Langzahl abzurufen,
- eine Recheneinheit, ausgebildet eine Moduloreduktion und/oder eine Division der Integer-Langzahl durch Bilden eines Modulos und/oder eines Divisionsergebnisses der Integer-Langzahl durch einen Algorithmus auszuführen, wobei der Algorithmus zur Bestimmung des Modulos und/oder des Divisionsergebnisses eine Folge von Rechenschritten ausführt, deren Ausführungszeit unabhängig von der Integer-Langzahl ist
   und
- eine Ausgabeeinheit, ausgebildet das Modulo und/oder das Divisionsergebnis auszugeben.

Die Erfindung umfasst außerdem ein Computerprogrammprodukt, umfassend ein Computerprogramm, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Die Erfindung umfasst außerdem ein computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Zusammengefasst bietet die Erfindung bietet den Vorteil, dass sie die Implementierung einer simultanen Divisions- und Modulo-Operation in datenunabhängiger Laufzeit und Operationsfolge erlaubt und damit für jede seitenkanalresistente Implementierung mit Bedarf für eine solche Operation, darunter Algorithmen wie z.B. ECDSA, Zufallszahlenerzeugung, RSA, interessant ist. Außerdem gestattet sie die seitenkanalresistente Umsetzung einer näherungsweise Bias-freien Erzeugung von Zufallszahlen in einem Intervall [0, b), bei dem b keine Zweierpotenz ist. Ferner erfordert sie nur Rechenoperationen (bitweise logische Operationen und Additionen, aber z.B. keine Multiplikationen), die sich in Hardware (FPGA, ASIC) in vergleichsweise kleinen Schaltungen umsetzen lassen.

### DETAILLIERTE BESCHREIBUNG DER ERFINDUNG

Die Besonderheiten und Vorteile der Erfindung werden aus den nachfolgenden Erläuterungen mehrerer Ausführungsbeispiele anhand der schematischen Zeichnung ersichtlich.

Für die folgende Ausführungsbeispiel wird angenommen, dass auf der ausführenden Hardware (General-Purpose-Prozessor, Spezial-ASIC, FPGA, etc.) folgende Operationen in einer von den in den Operanden (ggf. inkl. Carrybit) enthaltenen Daten unabhängigen Laufzeit durchführbar sind:
I. Ausführung von Lade- und Speicher-Befehlen (Load- und Store-Befehlen) vom allgemeinen Speicher in ein Register bzw. von einem Register in den allgemeinen Speicher.
II. Die Addition zweier in Registern vorliegender Zahlen unter Berücksichtigung eines Carrybits (z.B. aus einer vorangehenden Addition). Aus Annahme I. folgt, dass es dann auch möglich ist, zwei Langzahlen X und Y im allgemeinen Speicher (mit der Limb-Darstellung X= (Xᵤ, Xᵤ₋₁, ..., X₀) und Y= (Yᵤ, Yᵤ₋₁, ..., Y₀). Ein Limb bezeichnet im Falle einer Langzahl einen Ausschnitt der Langzahl, der üblicherweise so gewählt ist, dass er gerade noch in ein Register des ausführenden Prozessors passt. Dementsprechend wird eine Langzahl durch eine Folge mehrerer Limbs repräsentiert.) nach folgendem Schema in datenunabhängiger Laufzeit zu addieren, wobei das Ergebnis in einer Langzahl Z= (Zᵤ, Zᵤ₋₁, ..., Z₀) und dem einen eventuellen Übertrag anzeigenden Carrybit c gespeichert wird: function add_big_numbers(X, Y, u):

   ```
c := 0
for i = 0..u:
c, Zi := add(Xi,Yi,c) // Xi, Yi, Zi in da-
tenunabh. Laufzeit lad-/speicherbar (nach I.)
return c, Z
```
III. Setzen eines Registers auf einen beliebigen konstanten Wert (und damit, gemäß I., auch Setzen eines Speicherbereiches fester Länge auf einen bestimmten Wert).
IV. Expansion des Status' (wobei der Status 0 oder 1 ist) eines einzelnen Registerbits auf alle Bits (und damit Generierung einer Folge an "0"er Bits oder einer Folge an "1"er Bits) eines Registers (und damit, gemäß I., auch Expansion des Status' eines einzelnen Bits aus einem Register/Speicherbereich auf alle Bits eines Registers/Speicherbereich).
V. - XOR- ("^", logische "Oder"-Operation), - AND- ("&", logische "Und"-Operation), - Einerkomplementoperation ("~", wobei das Einerkomplement gebildet wird, indem alle Ziffern negiert werden. Aus der Ziffer 0 wird 1, aus der 1 wird 0.) zwischen zwei Registern (und damit, gemäß I., auch XOR-, AND- und Einerkomplementoperation zwischen zwei Speicherbereichen)
VI. Shiftoperationen von Registern um eine bestimmte Anzahl Bits (und damit, unter Verwendung von I., III. und V., auch das Shiften eines Speicherbereichs um eine bestimmte Anzahl Bits), wobei durch die Shiftoperation Binär-Zeichen um eine angegebene Anzahl von Bitpositionen nach links oder rechts verschoben werden, >> shr, <<shl.

Diese Annahmen sind auf den meisten gängigen General-Purpose-Prozessorarchitekturen (z.B. x86/x64, ARM, MIPS) gegeben bzw. lassen sich in selbst entwickelten HW-Schaltungen (ASIC, FPGA) problemlos gewährleisten.

Zeitschwankungen, die nicht systematisch mit den geladenen bzw. abgelegten Daten zusammenhängen (z.B. durch Caching-Effekte, unregelmäßige Speicherzugriffszeiten durch parallel laufen Anwendungen, etc.), sind dagegen unkritisch. Außerdem stellt es kein Problem dar, wenn sich die Laufzeit mit den maximalen Bitlängen n+k+1 und k+1 von a bzw. b ändert (das eine Division mit steigender Länge der beteiligten Operanden länger dauert, liegt in der Natur der Sache), sofern sie bei festen Werten für n und k nicht von den Daten abhängt.

Sei R eine Integer-Langzahl, insbesondere eine vom RNG erzeugte Zufallszahl, aus dem Intervall [0, a), d.h. bestehend aus k+n+1 Bits und die Bezeichner a, b, n und k wie in Frage 2 definiert, d.h. k ist der Index des höchstwertigen Bits von b (mit 0 als erstem Index) und n die Anzahl der Zufallsbits, um welche a gemäß dem mit dem Stand der Technik beschriebenen Ansatz 3) erweitert wird.

Es wird die Implementierung einer Funktion zur Ausführung des erfindungsgemäßen Verfahrens vorgestellt, im Folgenden serial_divide genannt. serial_divide ist ein serielles Dividieren und/oder Moduloreduzieren, welches simultan (auch nacheinander ausführbar) die Division bzw. Moduloreduktion R / b bzw. R % b mit datenunabhängiger Laufzeit und Operationsfolge (Unter Annahme der Voraussetzungen I. - VI.), nur auf Basis von Additionen und logischen Operationen, berechnet. Die Funktion erhält als Inputargumente den Wert R, eine beliebig initialisierte Outputvariable L (sie wird zu Beginn der Funktion auf 0 initialisiert) und den Wert b als Divisor. Am Ende von serial_divide(R, L, b) enthält L den ganzzahligen Anteil der Division des ursprünglichen R durch b und R den unteilbaren Rest (d.h. das ursprüngliche R modulo b).

Function serial_divide (R, L, b):
1. Initialisierung:
   a. Setze u := 2ⁿ
   b. Setze b⁻ := (((2^{k+1}-1) ^ b) +1) << n (Zweierkomplement von b auf k+1 Bits, um n Bits nach links geshiftet, wobei das Zweierkomplement gebildet wird, indem eine Addition von 1 zum Einerkomplement stattfindet).
   c. Setze m := 2^{k+n+1} (1-Bit-Maske, weist an einer Bitstelle eine "1" auf, an allen anderen Bitstellen eine "0")
   d. Setze L := 0
2. Wiederhole für i=k+n ... k: (also insgesamt n+1 Mal)
   a. Setze R' := R+ b⁻ (subtrahiere um (i-k) geshiftetes b, um das (nur evtl. gesetzte) höchstwertige Bit in R zu eliminieren).
   b. Setze v := m & R' (in v ist allenfalls das Bit zu 2ⁱ⁺¹ gesetzt (erstes Bit außerhalb von b), welches anzeigt, ob es beim Addieren von b⁻ zu einem Übertrag kam; falls ja, war R groß genug, um das geshiftete b zu subtrahieren)
   c. Expandiere den Wert des Bits zu 2ⁱ⁺¹ von v in die i+1 Bit breite Variable w (d.h. w ist entweder 0 oder hat "1"-Bits genau an den Bitpositionen für 2⁰ bis 2ⁱ).
   d. Setze w' := w ^ (m-1) (Einerkomplement von w auf i+1 Bits)
   e. Setze R := (R' & w) ^ (R & w') (hiernach bleibt R unverändert, falls v=0, d.h. falls R in Schritt 2a. nicht groß genug war, um b zu subtrahieren; andernfalls wird R = R'-m, da das führende Bit von R' durch w ausmaskiert wird).
   f. Setze L := L + (u & w) (das Divisionsergebnis wird genau dann um die entsprechende Zweierpotenz inkrementiert, wenn v≠0 ist)
   g. Shifte: b⁻ := b⁻ >>1, m := m >> 1, u := u >> 1, wobei dieser Schritt g optional nur ausgeführt werden kann, wenn i>k, da nur dann nötig. Diese Bedingung ist von der Integer-Langzahl unabhängig und verursacht somit keine Abhängigkeit der Laufzeit von der Integer-Langzahl.
3. Return R, L

Im Folgenden sind zur Veranschaulichung des Ausführungsbeispiels Ausgaben von serial_divide für R = 19 mod b = 5 for k = 2 and n = 2 gegeben.

Initialisierung:
R: 19 (010011)
b: 5 (000101)
u: 4 (000100)
b-: 3 (000011)
m: 32 (100000)
2ⁿ·b-: 12 (001100)
L = 0

Loops:
i = 4
R': 31 (011111)
v: 0 (000000)
w: 0 (000000)
w': 31 (011111)
R: 19 (010011)
L: 0 (000000)
b-: 6 (000110)
m: 16 (010000)
u: 2 (000010)
i = 3
R': 25 (011001)
v: 16 (010000)
w: 15 (001111)
w': 0 (000000)
R: 9 (001001)
L: 2 (000010)
b-: 3 (000011)
m: 8 (001000)
u: 1 (000001)
i = 2
R': 12 (001100)
v: 8 (001000)
w: 7 (000111)
w': 0 (000000)
R: 4 (000100) // Divisionsergebnis
L: 3 (000011) // Moduloergebnis

Bemerkungen:
- Zu Beginn des i-ten Durchlaufs der Schleife ist:
   o u = 2^{i-k} - da n=i-k
   o b⁻ das Zweierkomplement von u·b auf i+1 Bits (d.h. u·b + b⁻ = 2ⁱ⁺¹)
   o m = 2ⁱ⁺¹
- Nach Schritt d. sind entweder die ersten i+1 Bits in w gesetzt und w'=0 (falls v≠0) oder die ersten i+1 Bits in w' gesetzt und w=0 (falls v=0).
- Zweierpotenzen lassen sich als einfache Shifts von 1 um einige Stellen nach links bestimmen. Das Verfahren benötigt also an keiner Stelle eine Multiplikation. Dies ist insbesondere bei einer Umsetzung in Hardware (FPGA, ASIC) wegen des geringeren Platzbedarfs von Interesse.

Speziell beschrieben am Ausführungsbeispiel ist ein Vorteil der Erfindung, nämlich eine bedingungsfreie Berechnung zweier verschiedener Zwischenergebnisse R und R' (von denen genau eines richtig ist) und die verzweigungsfreie Ausmaskierung des korrekten Ergebnisses vermöge "(R' & w) ^ (R & w')".

### KURZE BESCHREIBUNG DER ZEICHNUNGEN

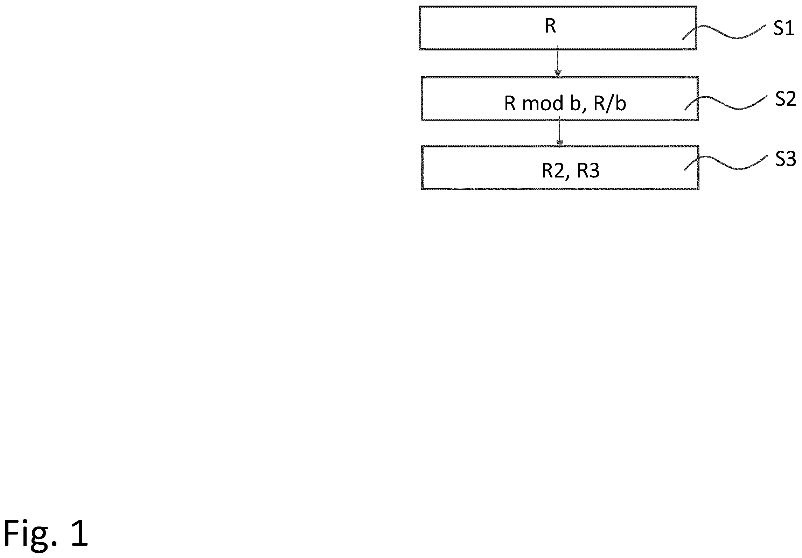

Es zeigt
- Fig. 1: ein Ablaufdiagramm des erfindungsgemäßen Verfahrens.

Fig. 1 zeigt ein Ablaufdiagramm des erfindungsgemäßen Verfahrens zur Moduloreduktion und/oder zur Division, mit den Schritten:
- Schritt S1: Ein Abrufen einer Integer-Langzahl R,
- Schritt S2: Eine Moduloreduktion und/oder eine Division der Integer-Langzahl mit einem Divisor b durch Bilden eines Modulos R2 und/oder eines Divisionsergebnisses R3 der Integer-Langzahl durch einen Algorithmus,
   wobei der Algorithmus zur Bestimmung des Modulos R2 und/oder des Divisionsergebnisses R3 eine Folge von Rechenschritten ausführt deren Ausführungszeit und Art unabhängig von der Integer-Langzahl R ist
   und
- Schritt S3: Ein Ausgeben des Modulos R2 und/oder des Divisionsergebnisses R3.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Computerimplementiertes Verfahren zur Moduloreduktion und/oder zur Division,
mit den Schritten:
- Ein Abrufen einer Integer-Langzahl (R),
- Eine Moduloreduktion und/oder eine Division der Integer-Langzahl durch Bilden eines Modulos (R2) und/oder eines Divisionsergebnisses (R3) der Integer-Langzahl durch einen Algorithmus,
wobei der Algorithmus zur Bestimmung des Modulos (R2) und/oder des Divisionsergebnisses (R3) eine Folge von Rechenschritten ausführt deren Ausführungszeit und Art unabhängig von der Integer-Langzahl (R) ist
und
- Ein Ausgeben des Modulos (R2) und/oder des Divisionsergebnisses (R3).

2. Verfahren nach Anspruch 1,
mit dem weiteren Schritt:
- Generieren eines kryptographischen Schutzes unter Verwendung des Modulos (R2) und/oder des Divisionsergebnisses (R3).

3. Verfahren nach Anspruch 2,
wobei der weitere Schritt durch:
- einen Elliptic Curve Digital Signature Algorithm und/oder
- einen Algorithmus zur Zufallszahlenerzeugung und/oder
- Rivest-Shamir-Adlema Verfahren
durchgeführt wird.

4. Verfahren nach Anspruch 2 oder 3,
wobei der kryptographische Schutz als:
- ein kryptographischer Schlüssel oder
- ein kryptographisches Schlüsselpaar oder
- eine Nonce
ausgebildet ist.

5. Verfahren zur Moduloreduktion nach einem der vorhergehenden Ansprüche,
wobei das Modulo (R2) innerhalb eines vorgegebenen Intervalls liegt,
wobei das Intervall von einer unteren Grenze bis zu einer oberen Grenze (b) definiert ist,
wobei das Modulo (R2) insbesondere mit:
- der Integer-Langzahl (R) als Dividend und
- der oberen Grenze (b) als Divisor
gebildet wird.

6. Verfahren nach Anspruch 5,
wobei die untere Grenze durch die Zahl null definiert ist.

7. Verfahren nach einem der vorhergehenden Ansprüche,
wobei der Algorithmus zur Bestimmung des Modulos (R2) und/oder des Divisionsergebnisses (R3) eine Folge von Rechenschritten ausführt deren:
- Anzahl und/oder
- Speicheradresse
außerdem unabhängig von der Integer-Langzahl (R) ist.

8. Verfahren nach einem der vorhergehenden Ansprüche,
wobei der Algorithmus zur Bestimmung des Modulos (R2) und/oder des Divisionsergebnisses (R3) ausschließlich:
- bitweise logische Operationen und
- eine Addition unter Berücksichtigung von Übertragsbits verwendet.

9. Verfahren nach Anspruch 8,
wobei die bitweisen logischen Operationen umfassen:
- einen Ladebefehl einer Binärzahl und/oder
- einen Speicherbefehl einer Binärzahl und/oder
- ein Setzen eines Binärzeichens an eine einzelne Bitposition und/oder
- eine Expansion eines Binärzeichens auf mehrere Bitpositionen und/oder
- eine logische XOR-Operation und/oder
- eine logische AND-Operation und/oder
- eine logische Einerkomplementoperation und/oder
- eine Shiftoperation, welche ausgebildet ist, Binärzeichen um eine definierte Anzahl an Bitpositionen zu verschieben.

10. Verfahren nach einem der vorhergehenden Ansprüche,
wobei der Algorithmus keinen Schritt aufweist, dessen Ausführung an eine Bedingung geknüpft ist, welche von der Integer-Langzahl (R) abhängig ist.

11. Verfahren nach einem der vorhergehenden Ansprüche,
wobei die Integer-Langzahl (R) von:
- einem Pseudo Random Number Generator oder
- einem True Random Number Generator
erzeugt wurde.

12. Programmierbares Hardwareelement,
insbesondere ausgebildet als ein integrierter Schaltkreis, ausgebildet ein Verfahren nach einem der vorhergehenden Ansprüche auszuführen.

13. Programmierbares Hardwareelement nach Anspruch 12, aufweisend:
- eine Abrufeinheit, ausgebildet eine Integer-Langzahl (R) abzurufen,
- eine Recheneinheit, ausgebildet eine Moduloreduktion und/oder eine Division der Integer-Langzahl durch Bilden eines Modulos (R2) und/oder eines Divisionsergebnisses (R3) der Integer-Langzahl durch einen Algorithmus auszuführen,
wobei der Algorithmus zur Bestimmung des Modulos (R2) und/oder des Divisionsergebnisses (R3) eine Folge von Rechenschritten ausführt, deren Ausführungszeit unabhängig von der Integer-Langzahl (R) ist
und
- eine Ausgabeeinheit, ausgebildet das Modulo (R2) und/oder das Divisionsergebnis (R3) auszugeben.

14. Computerprogrammprodukt, umfassend ein Computerprogramm, wobei das Computerprogramm in eine Speichereinrichtung einer Recheneinheit ladbar ist, wobei mit dem Computerprogramm die Schritte eines Verfahrens nach einem der Ansprüche 1 bis 11 ausgeführt werden, wenn das Computerprogramm auf der Recheneinheit ausgeführt wird.

15. Computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines Verfahrens nach einem der Ansprüche 1 bis 11 ausgeführt werden, wenn das Computerprogramm auf der Recheneinheit ausgeführt wird.
